(19) **Europäisches Patentamt**
**European Patent Office**
**Office européen des brevets**

(11) **EP 2 099 618 B1**

(12) **FASCICULE DE BREVET EUROPEEN**

(45) Date de publication et mention
de la délivrance du brevet:
**19.01.2011 Bulletin 2011/03**

(51) Int Cl.:
***B60C 9/18*** (2006.01)

(21) Numéro de dépôt: **07847612.4**

(22) Date de dépôt: **30.11.2007**

(86) Numéro de dépôt international:
**PCT/EP2007/063096**

(87) Numéro de publication internationale:
**WO 2008/068204 (12.06.2008 Gazette 2008/24)**

(54) **PNEUMATIQUE POUR VÉHICULE LOURD**

PNEUMATISCHER REIFEN FÜR SCHWERFAHRZEUG

PNEUMATIC TIRE FOR HEAVY VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **04.12.2006 FR 0610614**

(43) Date de publication de la demande:
**16.09.2009 Bulletin 2009/38**

(73) Titulaires:
• **Société de Technologie MICHELIN**
  **63000 Clermont-Ferrand (FR)**
• **MICHELIN Recherche et Technique S.A.**
  **1763 Granges-Paccot (CH)**

(72) Inventeur: **DURIF, Pierre**
**63530 Enval (FR)**

(74) Mandataire: **Le Cam, Stéphane Georges Elie**
**Manufacture Francaise des Pneumatiques**
**Michelin**
**23, place des Carmes-Déchaux**
**SGD/LG/PI - F35- Ladoux**
**63040 Clermont-Ferrand Cedex 9 (FR)**

(56) Documents cités:
**FR-A- 2 770 458      FR-A1- 2 756 778**
**US-A1- 2006 124 217**

## Description

La présente invention concerne un pneumatique, destiné à équiper un véhicule ou engin lourd de type génie civil, ledit pneumatique comprenant au moins une armature de carcasse radiale surmontée radialement d'une bande de roulement et présentant une largeur axiale supérieure à 18 pouces.

Bien que non limitée à ce type d'application, l'invention sera plus particulièrement décrite en référence à des pneumatiques pour véhicule de type chargeuse travaillant dans des mines et présentant une largeur axiale supérieure à 18 pouces. Ce type de chargeuse est utilisé dans les mines pour le remplissage des bennes des véhicules de type dumper.

L'armature de renforcement ou renforcement des pneumatiques et notamment des pneumatiques d'engin de génie civil est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc.), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Concernant la conception habituelle des pneumatiques pour engin de génie civil, l'armature de carcasse radiale, ancrée dans chaque bourrelet, est composée d'au moins une couche d'éléments de renforcement métalliques, les dits éléments étant sensiblement parallèles entre eux dans la couche. L'armature de carcasse est habituellement surmontée d'une armature de sommet composée d'au moins deux couches de sommet de travail d'éléments de renforcement métalliques, mais croisés d'une couche à la suivante en faisant avec la direction circonférentielle des angles compris entre 10 et 65°. Entre l'armature de carcasse et les couches de sommet de travail, on trouve habituellement deux couches d'éléments de renforcements, croisés d'une nappe à la suivante et présentant des angles inférieures à 12° ; la largeur de ces couches d'éléments de renforcement est habituellement inférieure à celles des couches de travail. Radialement à l'extérieur des couches de travail, on trouve encore des couches de protection dont les éléments de renforcement présentent des angles compris entre 10 et 65°. L'armature de sommet est elle-même surmontée d'une bande de roulement. Un pneumatique ayant les caractéristiques techniques du préambule de la revendication 1 est comme du document US-A- 20060124217.

On entend par « axiale », une direction parallèle à l'axe de rotation du pneumatique et par « radiale » une direction coupant l'axe de rotation du pneumatique et perpendiculaire à celui-ci. L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial ou plan médian circonférentiel est le plan circonférentiel passant par le centre ou sommet de la bande de roulement et qui divise le pneumatique en deux moitiés.

Un plan radial est un plan qui contient l'axe de rotation du pneumatique.

La direction longitudinale du pneumatique, ou direction circonférentielle, est la direction correspondant à la périphérie du pneumatique et définie par la direction de roulement du pneumatique.

Les pneumatiques pour engins de génie civil, tels que décrits ci-dessus, sont habituellement soumis à une pression comprise entre 4 et 10 bars pour des charges et dimensions usuelles.

La carcasse des pneumatiques radiaux, et plus particulièrement en ce qui concerne les pneumatiques de très grandes dimensions, est soumise à de grandes déformations radiales conduisant à des flexions importantes, notamment dues à la charge portée par le pneumatique.

Les dimensions de tels pneumatiques associées aux charges qu'ils supportent en roulage en charge conduisent ainsi à des flèches des pneumatiques de l'ordre de 40% ; Ils peuvent notamment subir des augmentations de charge supérieur à 50% du fait de surcharges dynamiques liées par exemple à des freinages pour les véhicules de type chargeuse.

La flèche d'un pneumatique est définie par la déformation radiale du pneumatique, ou variation de la hauteur radiale, lorsque celui-ci passe d'un état non chargé à un état chargé en statique, dans des conditions de charge et de pression nominales.

Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le crochet. Le diamètre extérieur du pneumatique est mesuré en statique dans un état non chargé à la pression nominale.

Les chargeuses qui sont utilisées dans les mines pour le remplissage des véhicules de type dumper sont utilisées de manière particulière conduisant à un roulage limité mais associé à des manoeuvres combinant des roulages en marche avant ou marche arrière avec des freinages importants, le godet de la chargeuse pouvant être en cours d'élévation au moment du freinage.

Les souhaits d'une productivité toujours plus importante conduisent à des déplacements avec de fortes accélérations et des freinages importants et donc des contraintes imposés aux pneumatiques qui augmentent.

Il apparaît des phénomènes d'oscillation du véhicule lors des différentes phases de freinage qui d'une part sont gênants pour le conducteur en termes de confort et d'autre part peuvent nuire à la productivité si le conducteur doit attendre que le véhicule se stabilise pour passer à l'étape suivante de son parcours. Cela peut notamment être le cas lorsque la chargeuse freine avant de déverser son godet dans le dumper pour éviter que les bras du godet viennent percuter le bord de la benne au risque d'une dégradation de la chargeuse.

Les inventeurs se sont ainsi donnés pour mission de répondre à la demande actuelle des utilisateurs et de fournir des pneumatiques pour véhicule de type chargeuse capables de supporter les conditions usuelles d'utilisation sans créer de mouvements d'oscillations trop importants en amplitudes et dans le temps.

Ce but a été atteint selon l'invention par un pneumatique pour véhicule lourd à armature de carcasse radiale, présentant un rayon extérieur R supérieur à 1000 mm, comportant une armature sommet radialement intercalé entre l'armature de carcasse et la bande de roulement, ladite armature de sommet étant constituée d'au moins une armature de sommet de protection, constituée d'au moins deux couches de protection et radialement adjacente à la bande de roulement, l'armature de sommet comportant un complexe constitué d'au moins une couche de mélange polymérique de largeur axiale inférieure à la largeur d'au moins une couche de protection de l'armature de sommet de protection et d'épaisseur supérieure à 16 mm et ledit complexe présentant un gradient radial de module d'élasticité, le module d'élasticité le plus faible étant supérieur à 15MPa.

Au sens de l'invention, un complexe correspond à un ensemble de plusieurs éléments qui peuvent être des couches de mélanges polymériques ou des couches d'éléments de renforcement.

Le rayon extérieur R du pneumatique est le rayon mesuré sur le pneumatique monté, gonflé à sa pression nominale et non chargé.

Au sens de l'invention, les modules d'élasticité sont des modules d'élasticité des couches et sont mesurés selon l'invention selon la direction longitudinale.

On entend par « module d'élasticité » d'un mélange caoutchouteux, un module sécant d'extension à 10 % de déformation et à température ambiante ; la mesure est réalisée après un premier cycle d'accommodation jusqu'à 10 % de déformation : - $E_{10} = \dfrac{F_{10}}{S \times \varepsilon_{10}}$

i.e. $E_{10} = \dfrac{F_{10}(1 + \varepsilon_{10})}{S_0 \times \varepsilon_{10}}$ et $E_{10} = \dfrac{F_{10} \times 1.1}{S_0 \times 0.1}$ dans

laquelle $\varepsilon_{10}$ est égale à 0.1 ; avec $E_{10}$ : module d'extension sécant à 10% de déformation ; $F_{10}$ : force d'extension à 10% d'extension ; $S_0$ : section initiale de l'éprouvette de test ; S : section de l'éprouvette de test à la déformation d'extension $\varepsilon$, dans le cas de matériau en caoutchouc, on sait que : $S = \dfrac{S_0}{1 + \varepsilon}$ ; et $\varepsilon_{10}$ : déformation d'extension à 10%. Les mesures de module d'élasticité d'un mélange caoutchouteux sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Selon une réalisation avantageuse de l'invention, la couche de mélange polymérique présente des propriétés d'élasticité isotropes. En d'autres termes, la couche de mélange polymérique présente des modules d'élasticité identiques quel que soit la direction d'élongation.

Les essais réalisés avec des pneumatiques selon l'invention ont montré que les oscillations observées notamment lors des freinages occasionnés par l'utilisation des véhicules équipés de ces pneumatiques sont amorties beaucoup plus rapidement, l'amplitude de ces oscillations diminuant également très vite. Cette observation s'accompagne notamment par une augmentation de la température de la zone centrale du pneumatique, les températures aux épaules n'étant pas modifiées par rapport à celles de pneumatiques de conception usuelle.

Les inventeurs pensent interpréter ces résultats par la présence, dans la partie centrale du pneumatique selon une coupe radiale, du complexe à haut module qui permet de dissiper de l'énergie. L'épaisseur et les modules d'élasticité de ce complexe sont suffisants pour faire apparaître une différence notable selon des critères subjectifs de confort.

Le gradient radial de module d'élasticité défini selon l'invention associé au choix des modules d'élasticité permet notamment de conduire à un cisaillement dudit complexe dans les différentes phases de formation de l'aire de contact entre le pneumatique et le sol sur lequel il roule.

Selon une réalisation avantageuse de l'invention, l'épaisseur d'au moins une couche de mélange polymérique constituant le complexe est supérieure à 0.01 fois le rayon extérieur R du pneumatique.

Une réalisation préférée de l'invention prévoit encore que le complexe est radialement surmonté d'au moins quatre couches d'éléments de renforcement.

Conformément à l'invention, le pneumatique présente de préférence une flèche supérieure ou égale à 40%.

Selon un mode de réalisation préféré de l'invention, le complexe est radialement intercalé entre l'armature de carcasse et l'armature de sommet de protection.

L'épaisseur du complexe est avantageusement inférieure à 0.03 fois le rayon extérieur R pour conserver une épaisseur de la bande de roulement suffisante pour satisfaire les exigences en matière d'usure et de thermique notamment pour des applications visant les chargeuses destinées à travailler avec des véhicules de type dumper.

Selon un mode de réalisation de l'invention, le complexe est constitué d'une couche de mélange polymérique d'épaisseur supérieure à 0.01 fois le rayon extérieur R du pneumatique et d'au moins une couche d'éléments de renforcement de module supérieur à 10 000 MPa et orientés selon un angle inférieur à 12°.

Selon ce mode de réalisation de l'invention, le pneumatique comporte de préférence au moins deux couches d'éléments de renforcement radialement adjacentes de module supérieur à 10 000 MPa et orientés selon un angle inférieur à 12°, les éléments de renforcement étant croisés d'une couche à la suivante.

De préférence encore selon l'invention, les couches d'éléments de renforcement radialement adjacentes de module supérieur à 10 000 MPa et orientés selon un angle inférieur à 12° sont radialement adjacentes à l'armature de carcasse. Conformément à ce type de réalisation, lors du passage dans la zone de l'aire de contact lorsque la partie radialement extérieure du complexe est mise en extension, la partie radialement intérieure de la couche de mélange polymérique d'épaisseur supérieure à 0.01 fois le rayon extérieur R du pneumatique est mise en compression. Les contraintes de cisaillement engendrées sont alors très importantes et permettent une consommation d'énergie importante, favorable à un amortissement des oscillations du véhicule.

Une variante avantageuse de l'invention prévoit que l'armature de sommet comporte encore une armature de sommet de travail constituée d'au moins deux couches de sommet de travail, l'armature de sommet de travail étant radialement adjacente au complexe.

Les essais réalisés ont mis en évidence que la présence d'une armature de sommet de travail constituée d'au moins deux couches d'éléments de renforcement conduit à une consommation d'énergie plus importante par cisaillement entre les éléments de renforcement dans une même couche ; cette consommation d'énergie plus importante a notamment été mise en évidence par une élévation encore plus importante de la température dans la zone du sommet du pneumatique.

Selon une réalisation préférée de l'invention, l'armature de sommet de travail est radialement adjacente à la partie du complexe présentant le plus bas module.

De préférence encore, l'armature de sommet de travail est radialement adjacente à l'armature sommet de protection.

Selon ces dernières variantes de réalisation de l'invention, la déformation des couches de travail est accentuée dans le sens d'une élongation, ce qui est plus favorable en termes d'endurance pour le pneumatique.

Selon une variante de réalisation avantageuse de l'invention, les couches de sommet de travail sont composées d'éléments de renforcement métalliques présentant un angle avec la direction circonférentielle compris entre 18 et 60°.

Avantageusement également, les éléments de renforcement des couches de sommet de travail sont croisés d'une couche à la suivante.

L'invention prévoit encore avantageusement que l'armature de sommet de protection est composée d'au moins deux couches d'éléments de renforcement métallique élastiques présentant un angle avec la direction circonférentielle compris entre 18 et 60°.

Selon un mode de réalisation préférée de l'invention, au moins une couche de sommet de protection, préférentiellement au moins la couche de sommet de protection radialement intérieure, présente une largeur axiale supérieure à la largeur de la couche de sommet de travail la plus large axialement.

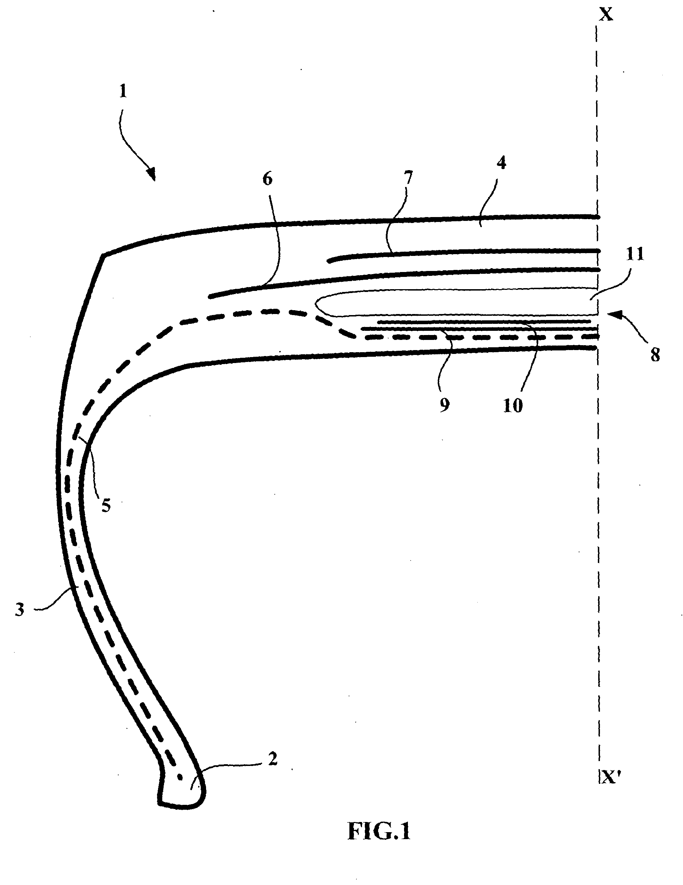

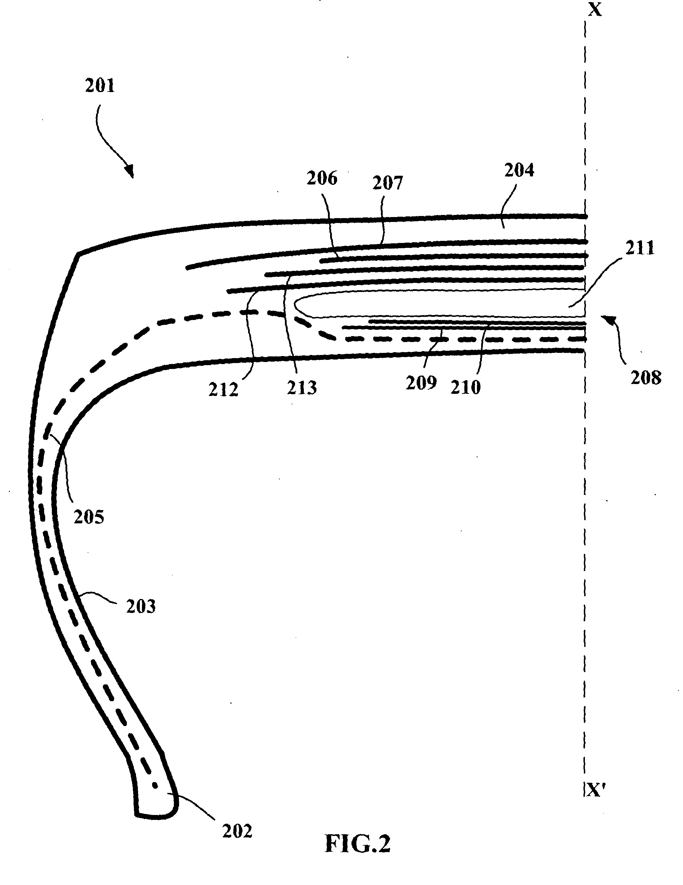

D'autres détails et caractéristiques avantageux de l'invention ressortiront ci-après de la description d'exemples de réalisation de l'invention en référence aux figures 1 et 2 qui représentent :

-    figure 1, une représentation schématique d'un pneumatique selon un premier mode de réalisation de l'invention,

-    figure 2, une représentation schématique d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

La Figure 1 représente un schéma vu selon une coupe radiale d'un pneumatique 1 réalisé conformément à l'invention. Le pneumatique 1 de dimension 45/65R45 comporte deux bourrelets 2 destinés à être montés sur des sièges de jante. Chaque bourrelet 2 est prolongé radialement vers l'extérieur par un flanc 3, ledit flanc 3 rejoignant radialement vers l'extérieur la bande de roulement 4 dudit pneumatique 1. Le pneumatique 1 comporte une armature de carcasse 5 constituée d'une couche d'élément de renforcement métallique.

L'armature de sommet radialement comprise entre la structure de carcasse 5 et la bande de roulement 4 du pneumatique 1 comporte encore deux couches de protection 6, 7 constituées d'éléments de renforcement élastiques présentant des largeurs respectives égalent à 245 et 288 mm.

Sont dits élastiques des câbles présentant sous une force de traction égale à la charge de rupture un allongement relatif au moins égal à 4%.

Sont dits inextensibles des câbles présentant sous une force de traction égale à 10% de la force de rupture un allongement relatif au plus égal à 0,2%.

Les câbles desdites deux couches de sommet de protection sont croisés d'une nappe 6 à l'autre 7 en faisant avec la direction circonférentielle des angles respectivement égaux à - 45° et + 45° avec la direction longitudinale du pneumatique.

Radialement entre l'armature de carcasse 5 et l'armature de sommet de protection est intercalé un complexe 8 constitué d'une part de deux couches 9, 10 d'éléments de renforcement inextensibles orientés à 8° par rapport à la direction longitudinale du pneumatique, parallèles entre eux et croisés d'une couche à la suivante, et d'une couche de mélange polymérique 11.

Les couches 9, 10 d'éléments de renforcement inextensibles orientés à 8° présentent respectivement des largeurs égales à 214 et 195 mm.

La couche de mélange polymérique 11 présente une largeur égale à 260 mm et une épaisseur maximum égale à 34 mm, correspondant à 0.025 fois le rayon extérieur R du pneumatique.

Un pneumatique ainsi réalisé conformément à l'invention a été testé sur un véhicule de type chargeuse CAT 992, celui-ci circulant dans des conditions usuelles ; ces conditions usuelles d'utilisation correspondent à des cycles de trajets en marche avant puis marche arrière, godet plein ou godet vide, celui-ci étant en position haute ou bien en phase de remontée ou de descente.

Les résultats obtenus sont des appréciations subjectives du pilote dont la fonction est d'analyser le comportement en termes d'efficacité et de confort. L'efficacité est appréciée en fonction des temps d'attentes éventuellement nécessaires pour l'amortissement des oscillations qui peuvent apparaître. Le confort est une analyse des secousses ou oscillations du véhicule en termes d'amplitude et de fréquence.

Les résultats obtenus sont comparés aux résultats obtenus avec des pneumatiques usuels présentant les mêmes caractéristiques excepté la présence du complexe 8. Les résultats sont obtenus dans les deux cas par le même pilote, les pneumatiques équipant le même véhicule et le cycle de test étant identique.

Cette comparaison conduit à un classement en faveur du pneumatique selon l'invention à la fois en termes de confort et d'efficacité quelles que soient les conditions d'utilisation, marche avant, marche arrière, godet plein ou vide, en position haute ou en cours de déplacement. Ces essais mettent en évidence un amortissement substantiel des oscillations obtenu avec le pneumatique selon l'invention tel que décrit sur la figure 1.

La figure 2 représente un schéma vu selon une coupe radiale d'un pneumatique 201 réalisé conformément à l'invention. Le pneumatique 201 se différencie du pneumatique 1 de la figure 1 par la présence supplémentaire de deux couches de sommet de travail 212, 213 radialement intercalées entre la couche de mélange polymérique 21 let l'armature de sommet de protection.

Ces couches de sommet de travail 212, 213 sont des couches d'élément de renforcement métalliques, orientés à 45° par rapport à la direction longitudinale du pneumatique et croisés d'une couche à la suivante.

En outre, les câbles de la couche de protection 206 la plus proche radialement de l'armature de travail sont croisés avec les câbles de la couche de travail 213 la plus éloignée radialement de l'armature de carcasse.

Des essais identiques à ceux décrits précédemment ont été réalisés. Les résultats obtenus ont mis en évidence que l'amortissement des oscillations est encore amélioré avec le pneumatique décrit à la figure 2 par rapport à celui de la figure 1.

**Revendications**

1.  Pneumatique (1, 201) pour véhicule lourd à armature de carcasse radiale (5, 205), comportant une armature de sommet (6, 7, 206, 207, 212, 213) radialement intercalée entre l'armature de carcasse et la bande de roulement (4, 204), ladite armature de sommet étant constituée d'au moins une armature de sommet de protection, constituée d'au moins deux couches de protection (6, 7, 206, 207) et radialement adjacente à la bande de roulement, **caractèrisé en ce que** ledit pneumatique présente un rayon extérieur R supérieur à 1000 mm, en ce que l'armature de sommet comporte un complexe (8, 208) constitué d'au moins une couche de mélange polymérique (11, 211) de largeur axiale inférieure à la largeur d'au moins une couche de protection de l'armature de sommet de protection et d'épaisseur supérieure à 16 mm et **en ce que** ledit complexe présente un gradient radial de module d'élasticité, le module d'élasticité le plus faible étant supérieur à 15MPa.

2.  Pneumatique (1, 201) selon la revendication 1, **caractérisé en ce que** la couche de mélange polymérique (11, 211) présente des propriétés d'élasticité isotropes

3.  Pneumatique (1, 201) selon la revendication 1 ou 2, **caractérisé en ce que** l'épaisseur d'au moins une couche de mélange polymérique (11, 211) constituant le complexe (8, 208) est supérieure à 0.01 fois le rayon extérieur R du pneumatique.

4.  Pneumatique (1, 201) selon l'une des revendications 1 à 3, **caractérisé en ce que** le complexe (8, 208) est radialement surmonté d'au moins quatre couches d'éléments de renforcement (206, 207, 212, 213).

5.  Pneumatique (1, 201) selon l'une des revendications précédentes, **caractérisé en ce qu'**il présente une flèche supérieure ou égale à 40%.

6.  Pneumatique (1, 201) selon l'une des revendications précédentes, **caractérisé en ce que** le complexe (8, 208) est radialement intercalé entre l'armature de carcasse (5, 205) et l'armature de sommet de protection (6, 7, 206, 207).

7.  Pneumatique (1, 201) selon l'une des revendications précédentes, **caractérisé en ce que** le complexe (8, 208) est constitué d'une couche de mélange polymérique (11, 211) d'épaisseur supérieure à 0.01 fois le rayon extérieur R du pneumatique et d'au moins une couche d'éléments de renforcement (9, 10, 209, 210) de module supérieur à 10 000 MPa et orientés selon un angle inférieur à 12°.

8.  Pneumatique (1, 201) selon la revendication 7, **caractérisé en ce que** le pneumatique comporte au moins deux couches d'éléments de renforcement (9, 10, 209, 210) radialement adjacentes de module supérieur à 10 000 MPa et orientés selon un angle inférieur à 12°, les éléments de renforcement étant croisés d'une couche à la suivante.

9.  Pneumatique (1, 201) selon l'une des revendications 7 ou 8, **caractérisé en ce que** les couches d'éléments de renforcement (9, 10, 209, 210) radialement adjacentes de module supérieur à 10 000 MPa et orientés selon un angle inférieur à 12° sont radialement adjacentes à l'armature de carcasse (5, 205).

10. Pneumatique (201) selon l'une des revendications précédentes, **caractérisé en ce que** l'armature de sommet (206, 207, 208, 212, 213) comporte une armature de sommet de travail (212, 213) constituée d'au moins deux couches de sommet de travail et **en ce que** l'armature de sommet de travail est radialement adjacente au complexe (208).

11. Pneumatique (201) selon la revendication 10, **caractérisé en ce que** l'armature de sommet de travail (212, 213) est radialement adjacente à la partie (211) du complexe (208) présentant le plus bas module.

12. Pneumatique (201) selon la revendication 10 ou 11, **caractérisé en ce que** l'armature de sommet de travail (212, 213) est radialement adjacente à l'armature sommet de protection (206, 207).

13. Pneumatique (201) selon l'une des revendications 10 à 12, **caractérisé en ce que** les couches de sommet de travail (212, 213) sont composées d'éléments de renforcement métalliques présentant un angle avec la direction circonférentielle compris entre 18 et 60°.

14. Pneumatique (201) selon l'une de revendications 10 à 13, **caractérisé en ce que** les éléments de renforcement des couches de sommet de travail (212, 213) sont croisés d'une couche à la suivante.

15. Pneumatique (1, 201) selon l'une des revendications précédentes, **caractérisé en ce que** l'armature de sommet de protection (6, 7, 206, 207).est composée d'au moins deux couches d'éléments de renforcement métallique élastiques présentant un angle avec la direction circonférentielle compris entre 18 et 60°.

16. Pneumatique (201) selon l'une des revendications 10 à 15, **caractérisé en ce qu'**au moins une couche de sommet de protection (207).présente une largeur axiale supérieure à la largeur de la couche de sommet de travail (212) la plus large axialement.

17. Utilisation d'un pneumatique (1, 201) selon l'une des revendications précédentes sur une chargeuse.

**Claims**

1. Tire (1, 201) for heavy vehicle, with radial carcass reinforcement (5, 205), comprising a crown reinforcement (6, 7, 206, 207, 212, 213) radially interposed between the carcass reinforcement and the tread (4, 204), said crown reinforcement consisting of at least one protective crown reinforcement, consisting of at least two protective layers (6, 7, 206, 207), and radially adjacent to the tread, said tire being **characterized in that** said tire having an outside radius R greater than 1000 mm, **in that** the crown reinforcement comprises a complex (8, 208) consisting of at least one layer of polymer mix (11, 211) whose axial width is less than the width of at least one protective layer of the protective crown reinforcement and whose thickness is greater than 16 mm, and **in that** the elastic modulus of said complex has a radial gradient, the lowest elastic modulus being greater than 15 MPa.

2. Tire (1, 201) according to Claim 1, **characterized in that** the layer of polymer mix (11, 211) has isotropic elasticity properties.

3. Tire (1, 201) according to Claim 1 or 2, **characterized in that** the thickness of at least one layer of polymer mix (11, 211) of the complex (8, 208) is greater than 0.01 times the outside radius R of the tire.

4. Tire (1, 201) according to one of Claims 1 to 3, **characterized in that** the complex (8, 208) is radially surmounted by at least four layers of reinforcing elements (206, 207, 212,213).

5. Tire (1, 201) according to one of the preceding claims, **characterized in that** it has a deflection of greater than or equal to 40%.

6. Tire (1, 201) according to one of the preceding claims, **characterized in that** the complex (8, 208) is radially interposed between the carcass reinforcement (5, 205) and the protective crown reinforcement (6, 7, 206, 207).

7. Tire (1, 201) according to one of the preceding claims, **characterized in that** the complex (8, 208) consists of a layer of polymer (11, 211) mix with a thickness greater than 0.01 times the outside radius R of the tire and at least one layer of reinforcing elements (9, 10, 209, 210) with a modulus greater than 10 000 MPa, said elements being oriented at an angle of less than 12°.

8. Tire (1, 201) according to Claim 7, **characterized in that** the tire comprises at least two radially adjacent layers of reinforcing elements (9, 10, 209, 210) of modulus greater than 10 000 MPa, the reinforcing elements being oriented at an angle of less than 12° and those of one layer forming an intersecting angle with those of the next.

9. Tire (1, 201) according to either of Claims 7 and 8, **characterized in that** the radially adjacent layers of reinforcing elements (9, 10, 209, 210) of modulus greater than 10 000 MPa and oriented at an angle of less than 12° are radially adjacent to the carcass reinforcement (5, 205).

10. Tire (201) according to one of the preceding claims, **characterized in that** the crown reinforcement (206, 207, 208, 212, 213) comprises a working crown reinforcement (212, 213) consisting of at least two working crown layers and **in that** the working crown reinforcement is radially adjacent to the complex (208).

11. Tire (201) according to Claim 10, **characterized in that** the working crown reinforcement (212, 213) is radially adjacent to that part (211) of the complex (208) which has the lowest modulus.

**12.** Tire (201) according to Claim 10 or 11, **characterized in that** the working crown reinforcement (212, 213) is radially adjacent to the protective crown reinforcement (206, 207).

**13.** Tire (201) according to one of Claims 10 to 12, **characterized in that** the working crown layers (212, 213) are composed of metal reinforcing elements forming an angle with the circumferential direction of between 18° and 60°.

**14.** Tire (201) according to one of Claims 10 to 13, **characterized in that** the reinforcing elements of one working crown layer (212, 213) form an intersecting angle with those of the next.

**15.** Tire (1, 201) according to one of the preceding claims, **characterized in that** the protective crown reinforcement (6, 7, 206, 207) is made up of at least two layers of elastic metal reinforcing elements forming an angle with the circumferential direction of between 18° and 60°.

**16.** Tire (201) according to one of Claims 10 to 15, **characterized in that** at least one protective crown layer (207) has an axial width greater than the width of the axially widest working crown layer (212).

**17.** Use of a tire (1, 201) according to one of the preceding claims on a loader.


**Patentansprüche**

**1.** Luftreifen (1, 201) für Schwerfahrzeug mit radialer Karkassenbewehrung (5, 205), der eine Scheitelbewehrung (6, 7, 206, 207, 212, 213) aufweist, die radial zwischen die Karkassenbewehrung und den Laufstreifen (4, 204) eingeschoben ist, wobei die Scheitelbewehrung aus mindestens einer Schutzscheitelbewehrung besteht, die aus mindestens zwei Schutzschichten (6, 7, 206, 207) besteht und radial dem Laufstreifen benachbart ist, **dadurch gekennzeichnet, dass** der Luftreifen einen Außenradius R größer als 1000 mm hat, dass die Scheitelbewehrung einen Komplex (8, 208) aufweist, der aus mindestens einer Schicht aus Polymermischung (11, 211) einer axialen Breite geringer als die Breite mindestens einer Schutzschicht der Schutzscheitelbewehrung und einer Dicke von mehr als 16 mm besteht, und dass der Komplex einen radialen Elastizitätsmodulgradient hat, wobei der niedrigste Elastizitätsmodul größer als 15MPa ist.

**2.** Luftreifen (1, 201) nach Anspruch 1, **dadurch gekennzeichnet, dass** die Schicht aus Polymermischung (11, 211) isotrope Elastizitätseigenschaften hat.

**3.** Luftreifen (1, 201) nach Anspruch 1 oder 2, **dadurch gekennzeichnet, dass** die Dicke mindestens einer den Komplex (8, 208) bildenden Schicht aus Polymermischung (11, 211) größer als 0,01 Mal der Außenradius R des Luftreifens ist.

**4.** Luftreifen (1, 201) nach einem der Ansprüche 1 bis 3, **dadurch gekennzeichnet, dass** über dem Komplex (8, 208) radial mindestens vier Schichten von Verstärkungselementen (206, 207, 212, 213) liegen.

**5.** Luftreifen (1, 201) nach einem der vorhergehenden Ansprüche, **dadurch gekennzeichnet, dass** er eine Einfederung größer als oder gleich 40% hat.

**6.** Luftreifen (1, 201) nach einem der vorhergehenden Ansprüche, **dadurch gekennzeichnet, dass** der Komplex (8, 208) radial zwischen die Karkassenbewehrung (5, 205) und die Schutzscheitelbewehrung (6, 7, 206, 207) eingeschoben ist.

**7.** Luftreifen (1, 201) nach einem der vorhergehenden Ansprüche, **dadurch gekennzeichnet, dass** der Komplex (8, 208) aus einer Schicht einer Polymermischung (11, 211) mit einer Dicke von mehr als 0,01 Mal der Außenradius R des Luftreifens und aus mindestens einer Schicht von Verstärkungselementen (9, 10, 209, 210) mit einem Modul von mehr als 10 000 MPa und gemäß einem Winkel von weniger als 12° ausgerichtet besteht.

**8.** Luftreifen (1, 201) nach Anspruch 7, **dadurch gekennzeichnet, dass** der Luftreifen mindestens zwei Schichten von radial benachbarten Verstärkungselementen (9, 10, 209, 210) mit einem Modul von mehr als 10 000 MPa und gemäß einem Winkel von weniger als 12° ausgerichtet aufweist, wobei die Verstärkungselemente sich von einer Schicht zur nächsten kreuzen.

**9.** Luftreifen (1, 201) nach einem der Ansprüche 7 oder 8, **dadurch gekennzeichnet, dass** die radial benachbarten Schichten von Verstärkungselementen (9, 10, 209, 210) mit einem Modul von mehr als 10 000 MPa und gemäß einem Winkel von weniger als 12° ausgerichtet radial der Karkassenbewehrung (5, 205) benachbart sind.

**10.** Luftreifen (201) nach einem der vorhergehenden Ansprüche, **dadurch gekennzeichnet, dass** die Scheitelbewehrung (206, 207, 208, 212, 213) eine Arbeitsscheitelbewehrung (212, 213) aufweist, die aus mindestens zwei Arbeitsscheitelschichten besteht, und dass die Arbeitsscheitelbewehrung radial dem Komplex (208) benachbart ist.

**11.** Luftreifen (201) nach Anspruch 10, **dadurch gekennzeichnet, dass** die Arbeitsscheitelbewehrung (212, 213) radial dem Bereich (211) des Komplexes (208) benachbart ist, der den niedrigsten Modul hat.

**12.** Luftreifen (201) nach Anspruch 10 oder 11, **dadurch gekennzeichnet, dass** die Arbeitsscheitelbewehrung (212, 213) der Schutzscheitelbewehrung (206, 207) radial benachbart ist.

**13.** Luftreifen (201) nach einem der Ansprüche 10 bis 12, **dadurch gekennzeichnet, dass** die Arbeitsscheitelschichten (212, 213) aus metallischen Verstärkungselementen zusammengesetzt sind, die einen Winkel mit der Umfangsrichtung haben, der zwischen 18 und 60° liegt.

**14.** Luftreifen (201) nach einem der Ansprüche 10 bis 13, **dadurch gekennzeichnet, dass** die Verstärkungselemente der Arbeitsscheitelschichten (212, 213) sich von einer Schicht zur nächsten kreuzen.

**15.** Luftreifen (1, 201) nach einem der vorhergehenden Ansprüche, **dadurch gekennzeichnet, dass** die Schutzscheitelbewehrung (6, 7, 206, 207) aus mindestens zwei Schichten von elastischen Metallverstärkungselementen zusammengesetzt ist, die einen Winkel mit der Umfangsrichtung haben, der zwischen 18 und 60° liegt.

**16.** Luftreifen (201) nach einem der Ansprüche 10 bis 15, **dadurch gekennzeichnet, dass** mindestens eine Schutzscheitelschicht (207) eine axiale Breite größer als die Breite der axial breitesten Arbeitsscheitelschicht (212) hat.

**17.** Verwendung eines Luftreifens (1, 201) nach einem der vorhergehenden Ansprüche auf einem Lader.

**FIG.1**

**FIG.2**

**EP 2 099 618 B1**

**Documents brevets cités dans la description**

- EP 0582196 A

- US 20060124217 A